Europäisches Patentamt

European Patent Office

Office européen des brevets

(11) Publication number: 0 390 352
A2

## (12) EUROPEAN PATENT APPLICATION

(21) Application number: 90302394.3

(22) Date of filing: 07.03.90

(51) Int. Cl.5: G21C 17/017

(30) Priority: 27.03.89 US 328685

(43) Date of publication of application:
03.10.90 Bulletin 90/40

(84) Designated Contracting States:
CH DE ES FR IT LI NL SE

(71) Applicant: Egger, Shawn E.
7749 West Dead Creek Rd.,
Baldwinsville New York 13027(US)

(72) Inventor: Egger, Shawn E.
7749 West Dead Creek Road
Baldwinsville, New York 13027(US)
Inventor: Sherman, Harold G.
32 Braeside Road
Baldwinsville, New York 13027(US)

(74) Representative: Jackson, Peter Arthur et al
Gill Jennings & Every 53-64 Chancery Lane
GB-London WC2A 1HN(GB)

(54) Apparatus for remotely controlled movement through tubular conduit.

(57) Apparatus for remotely controlled movement through linear and curved sections of a pipe, or other tubular conduit. The apparatus includes a pair of members (44) spaced apart along a common, central axis. Each member carries a plurality of extensible and retractable pneumatic cylinders (14-20) for movement of frictional engagement elements (34-40) into and out of engagement with the interior wall of the pipe. One or more axial drive cylinders (22,24) rigidly connect the spaced members for movement thereof toward and away from one another. The apparatus carries equipment for inspecting, measuring and/or performing other operations on the pipe, and is of simple and economical design, requiring no gimbal joints or other special linkages for movement in the intended manner.

Xerox Copy Centre

## APPARATUS FOR REMOTELY CONTROLLED MOVEMENT THROUGH TUBULAR CONDUIT

The present invention relates to apparatus for controlled movement through an elongate tubular contuit and, more specifically, to apparatus for remotely controlled, stepped movement through a pipe to perform inspections, measurements, and/or other operations within the pipe.

Piping such as that used in nuclear power generating facilities, as well as in other applications, must be inspected prior to use and periodically thereafter to determine whether cracks or flaws are present, e.g, at welded locations, which could indicate an actual or potential hazardous conditions. It is desirable that means be provided for transporting inspection apparatus, such as a television camera for performing visual inspections on a remote monitor, through the piping. The transporting apparatus may carry equipment in addition to the camera for assisting in visual or ultrasonic inspection, and/or for performing other operations, such as welding or grinding, within the piping.

US-A-4675728 discloses apparatus including a carriage mounted on wheels for movement through the interior of elongate piping to assist in visual inspection thereof. Another form of apparatus for movement through linear and curved sections of piping to permit visual inspection and other operations to be performed therein is disclosed in US-A-4460920 and JP-B-60-85085. The apparatus of these patents includes two stepping mechanisms having parts movable into and out of gripping engagement with the inside walls of the piping, and drive means for axial movement of the two mechanisms through the pipe. The stepping mechanisms are connected by further structure including at least one gimbal-type joint to permit articulated relative movement of the two spaced stepping mechanisms. The axial drive means may comprise an extensible and retractable cylinder and piston connected between one of the stepping mechanisms and the structure carring the gimbal-type joint which was believed to be necessary in order to permit movement of the apparatus through curved sections of piping.

According to the invention, apparatus for controlled movement through the interior of an elongate, tubular conduit having both linear and curved sections, the apparatus comprising first and second stepping members each including a rigid frame disposed about a central axis, and frictional engagement means mounted upon the frame and movable with respect thereto between outwardly extended and inwardly retracted positions relative to the central axis; means for moving the frictional engagement means of each of the stepping members between the outwardly extended and retracted positions for frictional engagement with and disengagement from the inside surface of the conduit; and axial drive means interconnecting the first and second stepping members in spaced relation for relative movement along the central axis, the axial drive means comprising at least one extensible and retractable member connected at opposite ends to the rigid frames of the first and second stepping members, respectively (as disclosed in US-A-4460920) is characterised in that the axial drive means is rigidly connected at its ends to the rigid frames of the stepping members whereby the stepping frames are rigid with one another except for axial displacement. The arrangement will be such that, in use, with a complementary conduit the frictional engagement of the engagement means with the inside surface of the conduit and the force moving the engagement means to the outwardly extended position and moving the extensible and retractable member are such that:

i) the frictional engagement of the engagement means of each stepping member will support the remainder of the apparatus in spaced relation to the inside surface of the the conduit without significant slippage, during movement through linear sections of the conduit; and,

ii) the frictional engagement permits slippage of the engagement means of a stepping member upon the inside surface of the conduit to permit limited rotation of the apparatus about an axis transverse to the axis of the conduit in response to movement of the extensible and retractable member during movement through curved sections of the conduit.

The axial drive means may comprise at least one cylinder having a piston and piston rod movable along a line parallel with the central axis. In that case, the cylinder may be rigidly connected at one end to the first stepping member, and the piston rod extends from the other end of the cylinder and is rigidly connected the second stepping member.

The frictional engagement means comprise a plurality of friction feet affixed to the ends of respective piston rods and the means for moving the engagement means comprise cylinders from which the piston rods extend.

There may be at least one element attached to the rigid frame adjacent to each of the feet, the element having an outer portion positioned farther from the central axis than the outermost surface of the adjacent foot when the associated piston rod is fully retracted, whereby the outer portion will contact the internal surface of the tubular conduit before the adjacent foot when the stepping member is advanced to cause the contact in an curved section of the conduit.

The apparatus may be moved through the pipe in step fashion by retracting the feet, or other frictional engagement means, of one stepping member while those of the other stepping member are extended, in frictional contact with the pipe wall, and actuating the axial drive means to effect relative axial movement of the stepping members.

A combination of features permits movement of the apparatus around elbows or through other curved sections of the pipe. The axial drive means is bolted or otherwise rigidly affixed at one end to the frame of one of the stepping members, and at the other end to the frame of the other stepping member. As the apparatus enters a curved section of the pipe and the axial drive is extended, skids one side of the leading stepping member contact and travel along the pipe surface. This produces some slippage of the frictional engagement means of the rear stepping member on the pipe surface, resulting in some pivoting movement of the entire apparatus within the pipe. The contact area and coefficient of friction between the frictional engagement means and the pipe wall relative to the outward force exerted by the stepping members is chosen to ensure that such pivoting movement occurs. Also, when the frictional engagement means are feet carried by rods of cylinders, the stroke of the pistons is such that when the stepping members are not centred in the pipe, as when travelling around a curved section, one or more of the piston rods may extend further out of its cylinder than the other(s). That is, the rod carring the friction foot on the side nearest the pipe wall will not extend as far as the rod on the opposite side. Repeated movement of the stepping member and axial drive means in predetermined sequence will result in movement of the apparatus through the curved pipe sections due to the rotation of the entire unit by slippage of the friction means on the pipe wall.

In a further preferred refinement, rather than using a single, axial drive cylinder connecting the stepping member at their centres, a pair of such cylinders are each rigidly connected to the stepping members in parallel relation on opposite sides of the axial centreline for concurrent operation in effecting relative axial movement of the stepping members. A television camera may be mounted between the two cylinders, extending along the axial centreline. This arrangement offers the dual advantages of increased rigidity of the overall apparatus, and keeping the television camera in focus as it is scanned around the internal circumference of the pipe.

In the accompanying drawings:-

Figure 1 is a front elevation of an apparatus incorporating the features of the present invention, with portions thereof in a second position of movement shown in phantom lines;

Figure 2 is a plan of the apparatus of Figure 1, with the same portions shown in phantom lines;

Figures 3a-3f are a series of diagrammatic, elevational views showing the sequence of movement of elements of the apparatus in effecting stepped movement through a linear section of piping; and,

Figure 4a-4r are a series of diagrammatic, elevational views showing the sequence of movement of the elements as the apparatus travels through a curved section of piping.

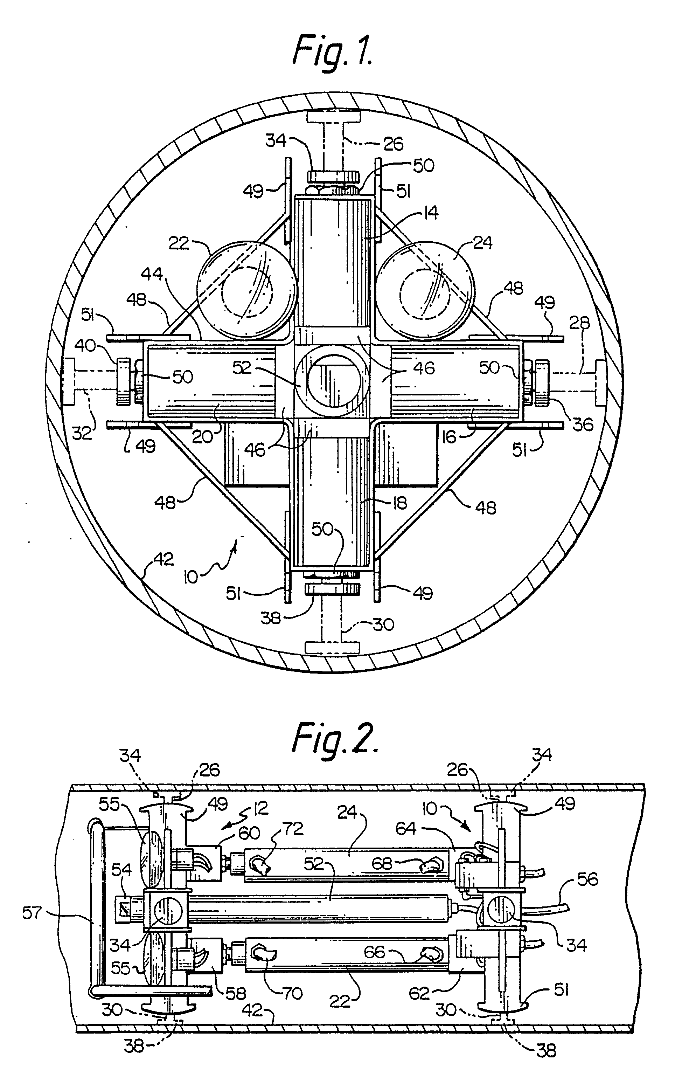

Figures 1 and 2 show a preferred embodiment of the apparatus, which includes a pair of spaced stepping members, denoted generally by reference numerals 10 and 12, constructed essentially symmetrically about a central axis. Each of the stepping members 10 and 12 includes a plurality of double-acting (i.e., dual ended), pneumatic cylinders; four such cylinders, numbered 14, 16, 18 and 20, are shown in the illustrated embodiment, the minimum practical number in any case being three. Two additional double-acting cylinders 22 and 24 extend between and rigidly join stepping members 10 and 12, parallel to one another and to the axis between the centers of the spaced members.

Pneumatic cylinders 14, 16, 18, 20, 22 and 24 are of conventional design, each having a piston mounted for reciprocating movement within the cylinder portion, and a rod connected to the piston and extending through one end of the cylinder. Piston rods 26, 28, 30 and 32 are shown in Figure 1 in phantom lines, extending from cylinders 14, 16, 18 and 20, respectively. When so extended, friction feet 34, 36, 38 and 40 on the ends of rods 26, 28, 30 and 32, respectively, engage the inside surface of a circular cross-section pipe 42. Each of the cylinders is provided with a fitting connected to a source of pressurized air at both ends, such mechanisms and the controls therefor being conventional and therefore not shown in the present drawings.

Stepping members 10 and 12 each includes a rigid framework upon which the four cylinders of each member are mounted. The frame of the member 10 is seen in Figure 1, that of member 12 being of the same or similar construction. A frame member 44 extends along both sides and over the outer ends of all four cylinders, and is welded or otherwise fixedly attached to a four-sided centre support 46. Intermediate braces 48 extend diagonally between and are welded to outer end portions of the frame member 44. Skids 49 and 51 are also fixedly attached to the outer frame member portions on opposite sides of the outer end of each of the cylinders 14, 16, 18 and 20. The outer edges of skids 49 and 51 are curved, as seen in Figure 2, and are positioned farther from the centres of the stepping members 10 and 12 (i.e. closer to the pipe wall) than are the friction feet 34, 36, 38 and 40 when the rods 26, 28, 30 and 32 are retracted. Screw-threaded fittings on each of the cylinders extend through openings in the portions of the frame member 44 which pass over the ends of the cylinders and are secured by nuts 50. In addition, or alternatively, to the threaded fittings and nuts, the cylinders 14, 16, 18 and 20 may be attached by screws extending through the frame member and into the cylinders.

A television camera 52, of commercially available form, is mounted between the members 10 and 12, preferably extending along the central axis between the two so that, as a scanning mechanism 54 is rotated to reflect an image of the internal circumferance of pipe 42 to the camera lens, there is no need to re-focus, provided the apparatus is centrally positioned in the pipe. The camera 52 is fixedly attached to and movable with the stepping member 12, an electrical cable 56 for operating, and relaying video signals from, the camera 52, extending loosely through the centre of the stepping member 10. Lamps 55 are mounted on the frame of stepping member 12 to illuminate the interior of the pipe. A "black light" tube 57 may also be mounted on the frame member for visual inspections employing a spray penetrant in the manner described in earlier-mentioned US-A-4675728. Other items, such as ultrasonic transducers, welding and grinding apparatus, etc., may be carried by the apparatus, but are not shown since the nature and arrangememt thereof are entirely optional.

As also seen in Figure 2, the ends of the piston rods of the cylinders 22 and 24 are rigidly connected by brackets 58 and 60, respectively, to the member 12, whereas the opposite ends of the cylinders are rigidly attached by brackets 62 and 64 to the stepping member 10. Thus, the entire apparatus is rigidly interconnected, the only relatively movable elements being the pistons and operating rods of the respective cylinders. Air from a pressurized source outside the pipe 42 is supplied to one end of cylinders 22 and 24 through tubes 66 and 68, respectively, for extending the piston rods, and to the opposite end through tubes 70 and 72 for retracting the rods.

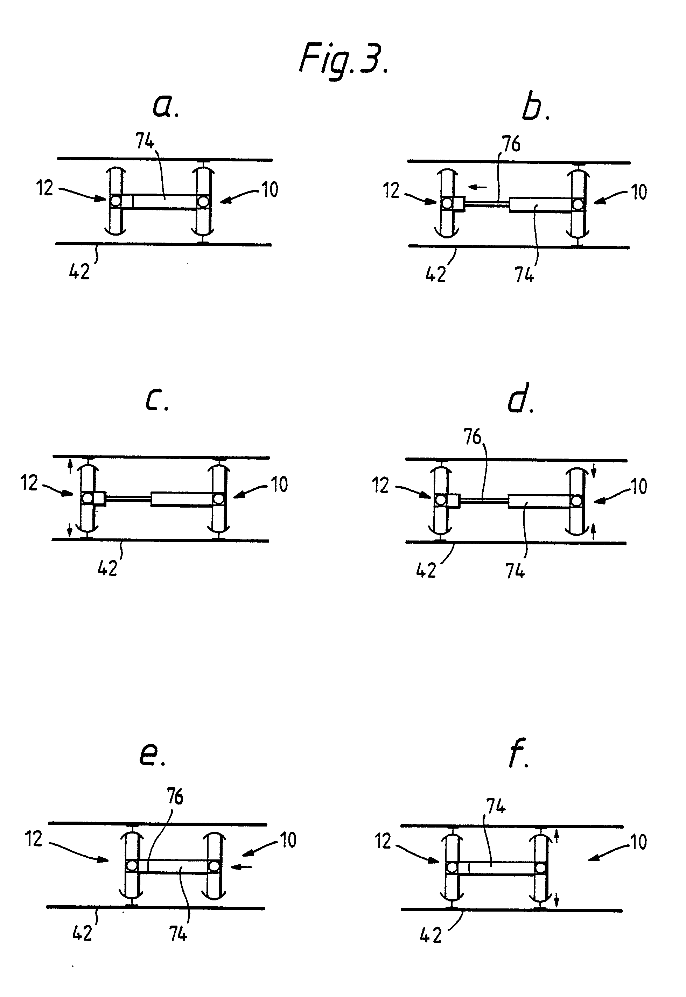

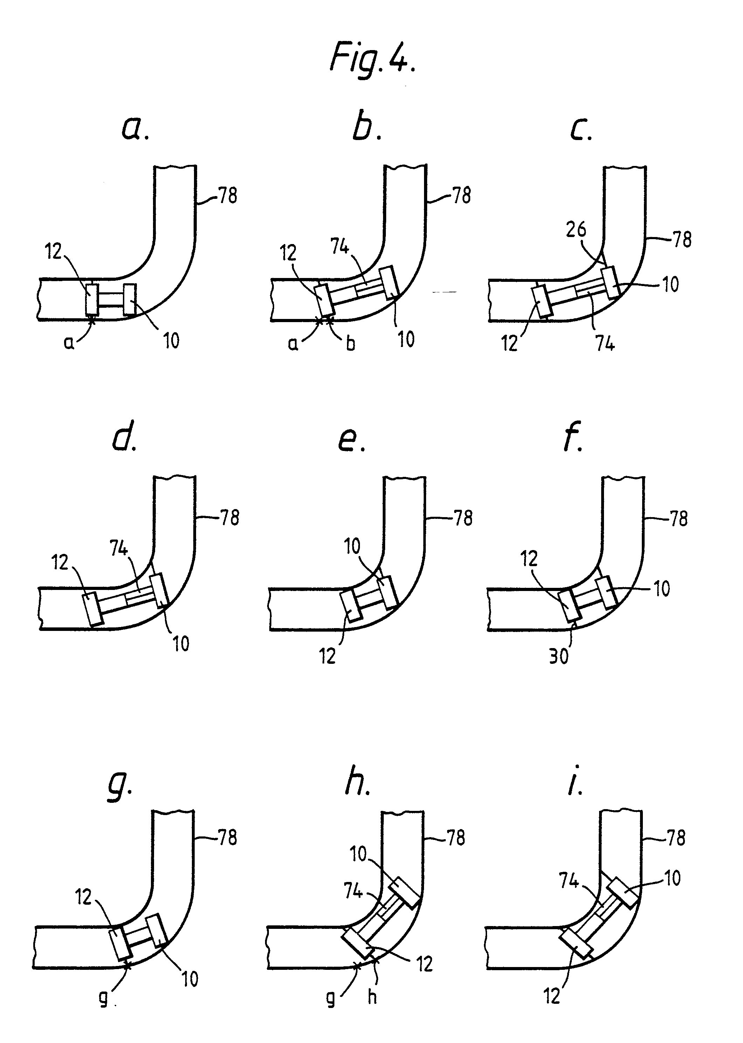

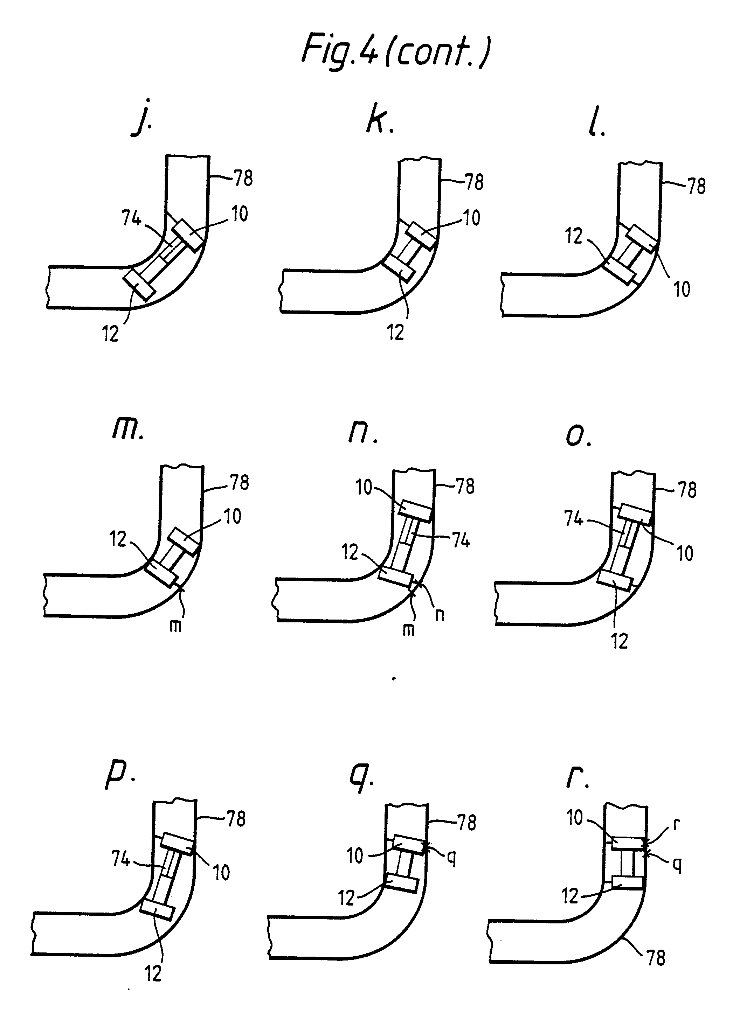

The manner of movement of the apparatus through linear and curved sections of the pipe 42 is illustrated in the sequential views of Figures 3a-3f and 4a-4r. In Figure 3a the apparatus is shown with the piston rods of the four cylinders of the stepping member 10 extended and those of both the cylinders of the stepping member 12 and of the axially extending cylinder(s) 22,24, here denoted by reference numeral 74, retracted. In normal operation the outward force applied by the stepping member cylinders, and the coefficient of friction between the feet on the ends of the operating rods and the inside surface of the pipe, relative to the weight of the apparatus and equipment carried thereby, are such that the portions of the apparatus extending from each stepping member are supported in cantilever fashion when the friction feet of one stepping member are engaged, and those of the other stepping member disengaged, with the pipe surface. That is, the frictional engagement of the feet of one stepping member will normally support the apparatus both when the operating rod-(s) 76 of the axially extending cylinder(s) is retracted, as in Figure 3a, and when extended, as in Figure 3b.

The rod 76 is extended, moving the stepping member 12 to the left, i.e., to the position of Figure 3b. The cylinders of the stepping member 12 are then actuated to extend the piston rods thereof, bring the friction feet into engagement with the inside of the pipe 42, as shown in Figure 3c. The piston rods of the stepping member 10 cylinders are then retracted, as in Figure 3d, the apparatus then being supported by the stepping member 12. The piston rod(s) 76 is then retracted, thereby moving the cylinder(s) 74 and stepping member 10 to the left, from the position of Figure 3d to that of Figure 3e. Extension of the piston rods of the cylinders of the stepping member 10 brings the elements to the position of Figure 3f, and the steps are then repeated in sequence, resulting in the step-fashion movement of the sequence, resulting in the step-fashion movement of the apparatus through the pipe 42.

The same sequence of actuation of the cylinders of stepping members 10 and 12, and of axial drive cylinder(s) 74 is followed in moving the apparatus through a curved section of pipe, denoted in Figures 4a-4r by reference numeral 78. The apparatus is shown in Figure 4a as the forward stepping member 10, with its operating rods retracted, approaches the curved section, the operating rods of the stepping member 12 being extended and the axial drive cylinder(s) 74 being retracted. As the cylinder(s) 74 are extended, the apparatus is rotated about an axis transverse to the pipe axis, with the skids 49 and 51 adjacent to the lower cylinder of the stepping member 10 sliding along the pipe surface on the outside of the curve, and friction feet 34 and/or 38 of the stepping member 12 slipping on the pipe surface during such rotation. In moving from the position of Figure 4a to that of Figure 4b, the lower friction foot on the stepping member 12 has slipped from approximately the position indicated at "a" to the illustrated position "b".

The operating rods of the cylinders of the stepping member 10 are then extended, with the rod 26 of the uppermost cylinder extending further out than the rod of the lower cylinder, as seen in Figure 4c. The rods of the stepping member 12 cylinders are then retracted (Figure 4d), followed by retraction of the axial drive cylinders 74, moving the upper part of stepping member 12 into contact with, or close proximity to the inside of the curve of pipe 78, as seen in Figure 4c. Thus, when the operating rods of the stepping member 12 cylinders are extended, the rod 30 of the lower cylinder extends farther than the rod of the upper cylinder, as illustrated in Figure 4f.

Upon retraction of the operating rods of the stepping member 10 cylinders, the elements are in the position of Figure 4g, having taken one complete forward step from the position of Figure 4a. The same sequence of movement of the cylinder operating rods is then repeated in taking the second complete step, with the apparatus moving through the positions of Figures 4g-4m. Again, as cylinders 74 are extended in moving from the Figure 4g to the Figure 4h position, the apparatus rotates as the friction foot 38 slips from position "g" to position "h".

A third complete step is illustrated in the sequence of cylinder operations and movements of Figures 4m-4r. In moving from the Figure 4m to the Figure 4n position, the friction foot 38 of the rear stepping member 12 slips on the pipe surface from the position "m" to the position "n". When the apparatus leaves the curved section pipe and reenters a linear section, in moving from the position of Figure 4q to that of Figure 4r, friction foot 38 of forward stepping member 10 slips from position "q" to position "r", and the central axis of the apparatus is again aligned with the pipe axis.

Although the apparatus is shown as completing travel through the curved section in three complete steps, the increments of axial travel of the apparatus may actually be quite small, depending on the radius of pipe curvature. However, movement is possible through curved sections of quite small radius. The length of stroke of the piston(s) of the cylinder(s) 74 is proportional to the diameter of the pipe in which the apparatus is to be used, and the radius of the curved sections through which it is expected to travel. For example, a unit designed to operate in a 152 mm diameter pipe may have an axial drive cylinder with a maximum stroke of about 25 mm whereas a unit designed to operate in a 254 or 305 mm diameter pipe with curved sections of larger radii may have a maximum stroke as large as 102mm.

The stroke of the cylinders on the stepping members should be about twice the distance between the outer surfaces of the friction feet and the pipe wall when the cylinders are retracted and the apparatus is centred in the pipe. That is, when the pipe wall on one side is engaged by skids 49 and 51 on one side, the piston rod on that side will extend only to the extent necessary to bring the friction foot even with the skids; accordingly, the cylinder on the opposite side must extend approximately twice as far in order for the friction foot to engage the pipe as when the apparatus is centred therein. This relationship is illustrated in Figures 4a-4r, as the apparatus travels through curved pipe section 78.

The rigidity of the apparatus and the frictional engagement of the feet on the ends of the piston rods of each stepping member with the internal surface of the pipe permit the apparatus to travel both upwardly and downwardly through vertical sections of pipe. Also, the apparatus has no problem in pulling behind it the electric, pneumatic, and any other lines by which various elements of the apparatus are connected to electric power, compressed air, etc., outside the pipe. The control system is conventional, and is therefore not shown in detail, perferably including solenoid-operated valves for controlling air flow to each end of the stepping member cylinders and the axial drive cylinders.

All four cylinders on each of stepping members are actuated for simultaneous extension and retraction of the piston rods, and the controls preferably may be selectively actuated either automatically or manually. Although pneumatically operated cylinders are preferred as the means of moving the friction feet into and out of engagement with the pipe surface, solenoid devices with friction feet on the ends of the movable plungers could be substituted, if desired. Furthermore, although the apparatus with a plurality of individual friction feet on each stepping member for movement into and out of engagement with the inside surface of the pipe, frictional engagement could be provided by other means, such as inflatable elements surrounding the frame of each stepping member. The invention is based upon the rigid interconnection of three expansion/contraction assemblies, i.e., the front and rear stepping members and the axial drive cylinder(s). Also, frictional engagement of the expanding and contracting elements on the stepping members with the internal pipe surface relative to the driving force by which the elements are expanded must satisfy two conditions: 1. the engagement of each stepping member must be tight enough to support the remainder of the apparatus in suspended fashion during movement through linear pipe sections which are vertical, and in cantilever fashion during movement through horizontal, linear sections, without significant slippage, and 2. the frictional engagement means must slip on the pipe surface to permit limited rotation of the apparatus about an axis transverse to the pipe axis in response to extension of the axial drive cylinder(s) during movement through curved pipe sections.

It will be appreciated that when the axial drive cylinder(s) are retracted and the apparatus is shortened from the Figure 4(j) configuration to the Figure 4(k) configuration, it is possible that the skids on the trailing stepping member 12 will slide over the radially inner part of the curved pipe wall while the frictional engagement means of the leading stepping member 10 slip on the pipe wall, thereby causing further rotation of the apparatus.

My earlier filed EP-A-0324644 discloses a similar apparatus to that illustrated herein except that it negotiated curved pipe sections by utilising a looseness between an end of each axial drive cylinder and the adjacent stepping member frame.

## Claims

1. Apparatus for controlled movement through the interior of an elongate, tubular conduit having both linear and curved sections, the apparatus comprising, first and second stepping members (10,12) each including a rigid frame (44) disposed about a central axis, and frictional engagement means (34-40) mounted upon the frame and movable with respect thereto between outwardly extended and inwardly retracted positions relative to the central axis; means (14-20) for moving the frictional engagement means of each of the stepping members between the outwardly extended and retracted positions for frictional engagement with and disengagement from the inside surface of the conduit (42); and axial drive means (22,24) interconnecting the first and second stepping members in spaced relation for relative movement along the central axis, the axial drive means comprising at least one extensible and retractable member connected at opposite ends to the rigid frames of the first and second stepping members, respectively;
characterised in that the axial drive means is rigidly connected at its ends to the rigid frames of the stepping members whereby the stepping frames are rigid with one another except for axial displacement.

2. Apparatus according to claim 1, wherein the axial drive means (22,24) comprises at least one cylinder (78) having a piston and piston rod (76) movable along a line parallel with the central axis.

3. Apparatus according to claim 1, wherein the axial drive means (22,24) comprises a pair of cylinders (78), each having a piston and a piston rod (76) movable along lines parallel to one another and to the central axis.

4. Apparatus according to 2 or claim 3, wherein the or each cylinder (78) is rigidly connected at one end to the first stepping member (10), and the respective piston rod (76) extends from the other end of the cylinder and is rigidly connected to the second stepping member (12).

5. Apparatus according to any one of the preceding claims, wherein the frictional engagement means comprises a plurality of friction feet (34-40) affixed to the ends of respective piston rods (26-32) and the means for moving the engagement means comprise cylinders (14-20) from which the piston rods extend.

6. Apparatus according to claim 5, wherein the cylinders (14-20) are mounted upon the rigid frame (44) of each of the stepping members with the piston rods (26-30) extending radially about the central axis.

7. Apparatus according to claim 5 or claim 6, wherein there are four of the cylinders (14-20) associated with each of the stepping member frames (44).

8. Apparatus according to any one of claims 5 to 7, and further including at least one element (49,51) attached to the rigid frame (44) adjacent each of the feet (34-40), the element having an outer portion positioned farther from the central axis than the outermost surface of the adjacent foot when the associated piston rod is fully retracted, whereby the outer portion will contact the internal surface of the tubular conduit before the adjacent foot when the stepping member is advanced to cause the contact in an curved section of the conduit.

9. Apparatus according to claim 8, wherein the element (49,51) comprises a pair of plate-like members affixed to the rigid frame (44) of each of the stepping members and positioned on opposite sides of each of the feet in the fully retracted position of the piston rods.

10. A method of carrying out operations within a tubular conduit having straight and curved sections, utilising apparatus according to any one of the preceding claims, wherein the apparatus is advanced through the conduit and the frictional engagement of the engagement means with the inside surface of the conduit and the force moving the engagement means to the outwardly extended position and moving the extensible and retractable member are such that:

i) the frictional engagement of the engagement means of each stepping member will support the remainder of the apparatus in spaced relation to the inside surface of the the conduit without significant slippage, during movement through linear sections of the conduit; and,

ii) the frictional engagement permits slippage of the engagement means of a stepping member upon the inside surface of the conduit to permit limited rotation of the apparatus about an axis transverse to the axis of the conduit in response to movement of the extensible and retractable member during movement through curved sections of the conduit.

## Fig.1.

## Fig.2.

# Fig.3.

## Fig.4.

# Fig.4 (cont.)

### j.

74
10
78
12

### k.

10
78
12

### l.

12
78
10

### m.

12
78
10
m

### n.

10
78
74
12
n
m

### o.

74
78
10
12

### p.

74
78
10
12

### q.

10
78
12
q

### r.

10
78
r
q
12
78